# EUROPÄISCHE PATENTSCHRIFT

(11) **EP 1 679 215 B1**
(45) Veröffentlichungstag und Bekanntmachung des Hinweises auf die Patenterteilung: **02.05.2007**
(21) Anmeldenummer: 05024960.6
(22) Anmeldetag: 15.11.2005
(51) Int. Cl.: B60J 7/20, E05B 65/19

(54) **Heckseitige Heckdeckelanbindung für Cabriolet-Fahrzeuge**
Rearward boot lid attachment for a cabriolet vehicle
Liaison arrière d'une porte de coffre de véhicule pour un cabriolet

(30) Priorität: 11.02.2005 DE 102005006568; 07.01.2005 DE 102005000946
(43) Veröffentlichungstag der Anmeldung: 12.07.2006
(73) Patentinhaber: CTS Fahrzeug-Dachsysteme GmbH, 74321 Bietigheim-Bissingen (DE)
(72) Erfinder: Schumacher, Thorsten, 25495 Kummerfeld (DE); Klemm, Holger, 22087 Hamburg (DE)
(74) Vertreter: Wittner, Walter

(56) Entgegenhaltungen:
- DE-A1- 19 946 454
- DE-C1- 19 851 181
- PATENT ABSTRACTS OF JAPAN Bd. 2000, Nr. 11, 3. Januar 2001 (2001-01-03) -& JP 2000 211373 A (TAKADA KOGYO KK), 2. August 2000 (2000-08-02)

## Beschreibung

Die Erfindung betrifft eine heckseitige Heckdeckelanbindung für Cabriolet-Fahrzeuge.

Bei Cabriolet-Fahrzeugen in Pontonbauweise ist die geöffnete Dachabdeckung nach hinten abgelegt und es wird zur Ablage der Dachabdeckung der Heckdeckel nach hinten oben in eine Ablagestellung aufgeschwenkt, bei Verschwenkung um einen im hinteren Bereich des Heckdeckels liegenden Drehpol. Bei entgegengesetzter Schwenklage, also bei Aufschwenken nach vorne oben nimmt der Heckdeckel seine Beladestellung ein und weist einen in seinem vorderen Endbereich liegenden Drehpol auf. Die Aufstellung in die Dachablagestellung erfolgt über eine dem vorderen Endbereich des Heckdeckels zugeordnete Stellvorrichtung bei Führung des Heckdeckels über eine heckseitige Heckdeckelanbindung.

Grundkonzepte dieser Art sind beispielsweise aus der DE 197 56 062 C1 oder der DE 199 46 454 A1 bekannt.

Die heckseitige Heckdeckelanbindung erfolgt im Falle der DE 197 56 062 C1 über eine Schwenkführung mit im Übergang zwischen Schwenkführung und Heckdeckel liegender Schlossanordnung. Gebildet ist die Schwenkführung durch eine Lenkerverbindung zwischen Schlossanordnung und Karosserie.

Bei einer heckseitigen Heckdeckelanbindung der eingangs genannten Art, wie sie aus der DE 199 46 454 A1 bekannt ist, ist die Schwenkführung, mit der der Heckdeckel über die Schlossanordnung verbunden ist, als Hubschwenkführung ausgebildet und es ist der der Schwenkführung zugeordnete Schlossteil über einen längs seiner gekrümmten Führungsbahn verfahrbaren und ausfahrbaren Führungsarm getragen, wobei durch die Führungsbahn für den Heckdeckel beim Aufstellen über dessen vordere Stellvorrichtung ein Drehpol vorgegeben ist, der zur Heckdeckelanbindung nach hinten versetzt liegt. Die Hubverstellung der Heckdeckelanbindung erfolgt gekoppelt an die Betätigung der frontseitigen Stellvorrichtung zwischen einer der Dachablagestellung des Heckdeckels entsprechenden oberen Lage und einer der Schließstellung des Heckdeckels entsprechenden unteren Lage als jeweiliger Endlage.

Der Erfindung liegt die Aufgabe zugrunde, für eine heckseitige Heckdeckelanbindung der eingangs genannten Art eine weitere Ausgestaltung aufzuzeigen, die zu einem kompakten mechanischen Aufbau führt, der trotzdem die Übertragung auch großer Stellkräfte ermöglicht und gegebenenfalls für Zusatzfunktionen in vorteilhafter Weise nutzbar ist.

Erreicht wird dies bei einer heckseitigen Heckdeckelanbindung gemäß dem Anspruch 1 dadurch, dass die Schwenkführung als Lenkeranordnung ausgebildet ist, die bei einfachem Aufbau eine frei mitlaufende, über den Heckdeckel mitgeschleppte Führung für den Heckdeckel bildet, wenn dieser über die ihm frontseitig zugeordnete Stellvorrichtung zwischen seiner Schließstellung und seiner Dachablagestellung verschwenkt wird. Die als Lenkeranordnung ausgebildete Schwenkführung kommt, bei ihrer Verschwenkung über den Heckdeckel bei dessen Beaufschlagung in Richtung auf seine Schließstellung, in eine dieser Schließstellung vorgelagerte Position, in der sie im Zugriffsbereich einer Stelleinrichtung liegt, und ist ausgehend von dieser Position (als einer Erfassungslage) über die Stelleinrichtung zu verstellen und zu verspannen.

Damit ist bei der erfindungsgemäßen Lösung die Stelleinrichtung für die Schwenkführung von der Stellvorrichtung für den Heckdeckel funktional unabhängig und kann dementsprechend darauf ausgelegt werden, möglichst klein bauend, und bevorzugt auch bei möglichst kleinen Stellwegen, den Heckdeckel in seine Schließlage zu ziehen und gegebenenfalls auch aus dieser Schließlage herauszudrücken, sowie gegebenenfalls auch die Schwenkführung in ihrer der Schließlage des Heckdeckels entsprechenden Stellung zu verriegeln.

Zum einfachen, stabilen, und insbesondere auch querstabilen Aufbau der erfindungsgemäßen Heckdeckelanbindung erweist es sich als zweckmäßig, diese im Wesentlichen symmetrisch zu einer Schwenkebene aufzubauen, und zwar bei zwischen den beiderseitigen Lenkeranordnungen liegendem, der Schwenkführung zugeordneten Schlossteil, das bevorzugt durch einen quer zur Schwenkebene liegenden Bügel gebildet ist.

Entsprechend der symmetrischen Ausgestaltung der Schwenkführung erweist sich auch für die Stelleinrichtung ein symmetrischer Aufbau als zweckmäßig, wobei die Symmetrie des Aufbaus im Wesentlichen lediglich bezüglich der Anordnung des Antriebs des der Stelleinrichtung zugeordneten Antriebsmotores durchbrochen ist, dessen Achse bevorzugt ebenfalls senkrecht zur Schwenkebene liegt, bei Erstreckung über die volle, quer zur Schwenkebene gemessene Breite.

Entsprechend dem symmetrischen Grundaufbau besteht die vorgesehene Lenkeranordnung aus zwei bezogen auf die Symmetrie einander gegenüberliegenden Viergelenken, die in Annäherung Lenkerparallelogramme bilden und deren Koppel den der Schwenkführung zugeordneten Schlossteil trägt.

Die Stelleinrichtung greift in ihrer Funktion als Spanneinrichtung in die Viergelenk-Lenkeranordnung ein, wobei die Stelleinrichtung bevorzugt die Koppel der Viergelenkanordnung beaufschlagt.

Ein einfacher Aufbau ergibt sich vor allen Dingen dadurch, dass koppelseitig lediglich Zapfen vorgesehen werden, die von Schwenkhaken der ebenfalls symmetrisch aufgebauten Spanneinrichtung zu beaufschlagen sind, wobei die diesbezüglichen Abstützkräfte über die Lagerung der Schwenkhaken unmittelbar in die Konsole der Heckdeckelanbindung eingeleitet werden.

Die Schwenkhaken sind über Antriebslenker verschwenkbar, die mit angetriebenen Stellsegmenten verbunden sind, wobei auch über die Lagerung der Schwenkhaken, die Anlenkungen der Antriebslenker an den Schwenkhaken und an den Stellsegmenten sowie die Lagerung der Stellsegmente wiederum eine Viergelenkanordnung geschaffen ist, die einen Übergang in eine Übertotpunktlage ermöglicht, sodass die der Schließstellung entsprechende Spannstellung durch eine Übertotpunktstellung zu sichern ist, die lediglich durch die Verstellung der Stellsegmente, und damit über den regulären Antrieb oder einen etwaigen Notantrieb aufzulösen ist.

Weitere Einzelheiten und Merkmale der Erfindung ergeben sich aus den Ansprüchen. Ferner wird die Erfindung nachstehend anhand eines stark schematisierten Ausführungsbeispieles erläutert, das auf den der Karosserie zugeordneten heckseitigen Teil der Heckdeckelanbindung beschränkt ist, sodass von der in der Verbindung zum Heckdeckel liegenden Schlossanordnung der dem Heckdeckel zugeordnete Schlossteil ebenso wenig gezeigt ist wie der Heckdeckel. Es zeigen:
- Fig. 1: eine schematisierte Seitenansicht des der Karosserie zugehörigen Teiles der heckseitigen Heckdeckelanbindung in ihrer der Dachablagestellung des Heckdeckels entsprechenden, ausgeschwenkten Position,
- Fig. 2: eine der Fig. 1 entsprechende Darstellung, wobei der karosserieseitige Teil der Heckdeckelanbindung in einer Betriebsstellung gezeigt ist, die einer der Schließstellung des Heckdeckels vorgelagerten Freigabestellung entspricht,
- Fig. 3: ein Schema des den Schwenkhaken umfassenden Teiles der Stelleinrichtung, beschränkt auf die Darstellung der Lage der Schwenkachsen in den den Fig. 1 und 2 entsprechenden Stellungen, und
- Fig. 4: schematisiert, zur Veranschaulichtung des zu einer Schwenkebene im Wesentlichen symmetrischen Aufbaues der Heckdeckelanbindung, eine Ansicht entsprechend dem Pfeil IV in Fig. 2.

Die nachfolgende Beschreibung der heckseitigen Heckdeckelanbindung eines Heckdeckels eines Fahrzeuges geht von bekannten Gegebenheiten für Cabriolet-Fahrzeuge aus, deren Dachabdeckung als Hardtop oder Softtop ausgestaltet ist und in eine heckseitige Aufnahme ablegbar ist. Hierzu wird der Heckdeckel des im Grundaufbau pontonförmigen Fahrzeuges mit offenem Aufbau ausgehend von seiner Schließstellung in eine nach hinten oben aufgeschwenkte Dachablagestellung aufgestellt. Die Aufstellung in Gegenrichtung, also nach vorne oben aufgeschwenkt, ergibt eine Beladestellung für den Kofferraum. In der Schließstellung und in der Dachablagestellung ist der Heckdeckel heckseitig verstellbar angebunden. In der Verbindung zwischen dem Heckdeckel und dem zur Karosserie festgelegten Teil der Heckdeckelanbindung ist eine Schlossanordnung vorgesehen, die lediglich zur Trennung des Heckdeckels von dem zur Karosserie festliegenden Teil der Heckdeckelanbindung geöffnet wird, derart, dass lediglich ein Schlossteil, nämlich der dem Heckdeckel zugeordnete Schlossteil mit dem Heckdeckel verschwenkt wird.

Eine solche Grundkonfiguration ist allgemein bekannt und zum Beispiel in der DE 199 46 454 A1 des Näheren beschrieben.

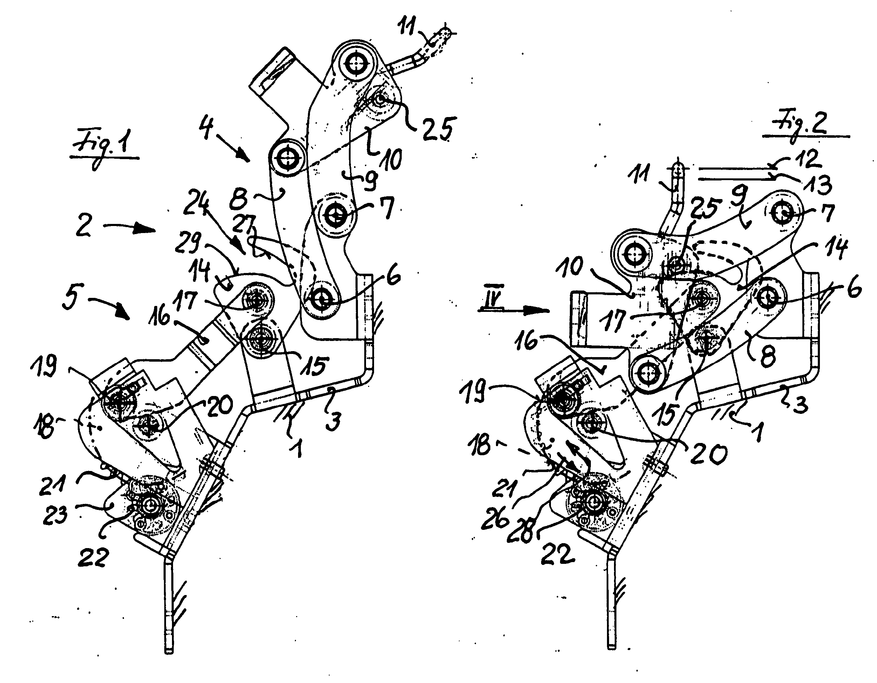

In den Figuren ist lediglich der zur Karosserie 1 des Fahrzeuges festgelegte Teil der erfindungsgemäßen heckseitigen Heckdeckelanbindung 2 gezeigt, und zwar mit einer heckseitig gegen die Karosserie 1 zu befestigenden Konsole 3, die Träger einer Schwenkführung 4 und einer Stelleinrichtung 5 ist, über die die Schwenkführung 4 in Schließrichtung des Heckdeckels, also bezogen auf die Darstellungen gemäß Fig. 1 und 2 nach unten, im Bereich der Schließstellung zu verspannen ist.

Die Heckdeckelanbindung 2 ist, wie Fig. 4 zeigt, symmetrisch zu einer Schwenkebene aufgebaut, die sich parallel zur Zeichenebene gemäß Fig. 1 und 2 erstreckt. Dementsprechend sind jeder der, bezogen auf eine Anordnung im Fahrzeug, in Querrichtung einander gegenüber liegenden Seiten einander ensprechende Teile der Schwenkführung 4 und der Stelleinrichtung 5 zugeordnet, wenn sich auch die nachfolgende Erläuterung weitgehend auf die jeweils der einen Seite zugehörigen Teile der Schwenkführung 4 und der Stelleinrichtung 5 bezieht.

Die Schwenkführung 4 ist durch eine Lenkeranordnung gebildet, die als Viergelenk zwei an der Konsole 3 in Schwenkachsen 6 und 7 gelagerte Lenker 8 und 9 umfasst, die mit einer Koppel 10 verbunden sind. Die Koppel 10 ist Träger des der Schwenkführung 4 zugeordneten Schlossteiles 11, das als Schließbügel dargestellt ist und dem ein heckdeckelseitiges, nicht dargestelltes Schlossteil, in Form einer verriegelnden Schlossaufnahme entspricht.

Wie der Vergleich der Fig. 1 und 2 zeigt, ist über die Schwenkführung 4 eine Verlagerung des der Schwenkführung 4 zugeordneten Schlossteiles 11 aus einer im Wesentlichen der Schließstellung des Heckdeckels entsprechenden aufrechten Stellung gemäß Fig. 2 nach hinten oben in eine schräg nach hinten ragende Stellung (Fig. 1) möglich, die der Dachablagestellung des Heckdeckels entspricht. Entsprechend der Erstreckung der Lenker 8 und 9, bezogen auf die Fahrtrichtung F des nicht dargestellten Fahrzeuges, in Fahrtrichtung in einer der Schließstellung des Heckdeckels entsprechenden Stellung (Fig. 2) und der Schwenkbewegung der Lenker 8 und 9 nach hinten oben, ist über die Heckdeckelanbindung eine heckseitige Führung des über eine frontseitige Stellvorrichtung angehobenen Heckdeckels derart erreicht, dass dessen Polachse in der der Ablagestellung entsprechenden Lage nach hinten verlagert ist.

Entsprechend der Verstellung des Heckdeckels über seine frontseitige Stellvorrichtung wird die Schwenkführung 4 jeweils mitgenommen und gelangt so auch aus ihrer der Ablagestellung des Daches gemäß Fig. 1 entsprechenden Stellung in die Stellung gemäß Fig. 2, wobei Fig. 2 für den der Schwenkführung 4 zugeordneten Schlossteil 11 in Form eines Bügels eine Lage 12 (Erfassungslage) zeigt, die der der Schließstellung des Heckdeckels entsprechenden Lage 13 des Bügels in Schließrichtung vorgelagert ist.

Die Schwenkführung 4 umfasst, wiederum jeder der Seiten der Heckdeckelanordnung zugeordnet, einen Schwenkhaken 14, der eine zur Konsole 3 lagefeste Schwenkachse 15 hat und der mit einem Antriebslenker 16 verbunden ist. Die Anlenkung des Antriebslenkers 16 am Schwenkhaken 14 erfolgt in einer zur Schwenkachse 15 versetzt liegenden Achse 17. Gegenüberliegend ist der Antriebslenker 16 an einem Stellsegment 18 in einer Achse 19 angelenkt, die zur Drehachse 20 des Stellsegmentes 18 versetzt liegt. Das Stellsegment 18 weist eine Verzahnung 21 auf und kämmt mit dem Ritzel 22, dem ein Antriebsmotor 23 zugeordnet ist, der gegebenenfalls als Getriebemotor ausgebildet ist und der sich mit seiner Achse ebenfalls quer zur Symmetrieebene erstreckt, wobei, wie Fig. 4 zeigt, die Baulänge des Antriebsmotores 23 bevorzugt etwa der Breite der Heckdeckelanbindung 2 entspricht, sodass sich diese als geschlossene kompakte Einheit darstellt. Fig. 1 zeigt den Schwenkhaken 14 in seiner geöffneten Lage bei nach hinten oben ausgeschwenkter Schwenkführung 4, sodass die Schwenkführung 4 und die Stelleinrichtung 5 außer Eingriff stehen.

Entsprechend sind die Gegebenheiten auch noch beim Einlaufen der Schwenkführung 4 in ihre der Schließstellung des Heckdeckels vorgelagerte Lage (wie bei 12 angedeutet), wobei Fig. 2 erkennen lässt, dass in dieser Lage der Schwenkhaken 14 mit seinem Maul 24 in Zugriffsstellung auf einen Riegelzapfen 25 liegt, der an der Koppel 10 der Schwenkführung lagefest angeordnet ist. Wird nun die Stelleinrichtung 5 aktiviert und das Stellsegment 18 über das Ritzel 22 in Richtung des Pfeiles 26 angetrieben, so wird der Schwenkhaken 14, was nicht gezeigt ist, um seine Schwenkachse 15 in Zugriffsrichtung auf den Riegelzapfen 25 verschwenkt und dieser über die obere Flanke 27 des Maules 24 als Zugflanke nach unten gezogen, mit einer entsprechenden Verlagerung des Schlossteiles 11 in seine der Schließstellung des Heckdeckels entsprechende Lage, die - bezogen auf das Schlossteil 11 - bei 13 angedeutet ist.

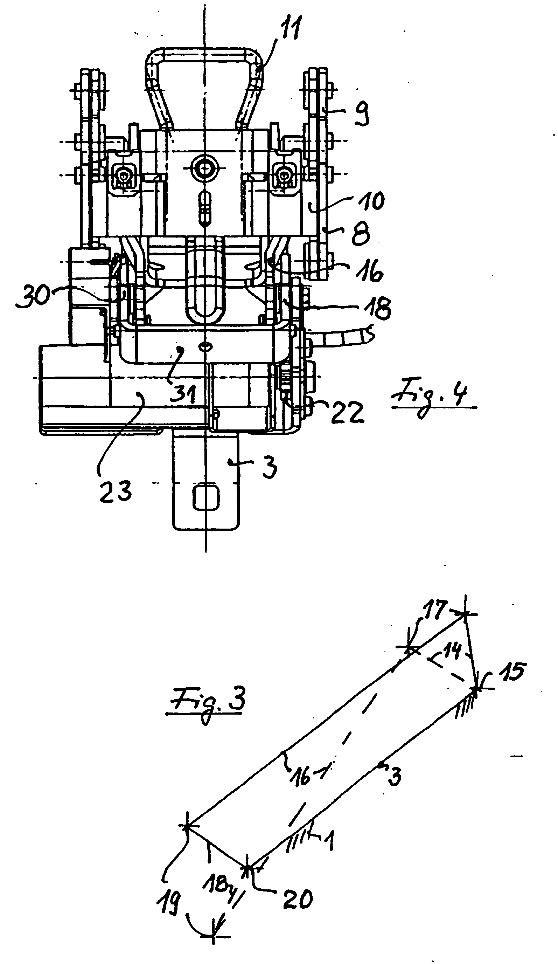

In Fig. 3 ist, bezogen auf die Stelleinrichtung 5, die Positionierung der Schwenkachse 15 des Schwenkhakens 15, der Achse 17 des Antriebslenkers 16 in der Anlenkung zum Schwenkhaken 14 und der Achse 19 des Antriebselementes 16 in der Anlenkung zum Stellsegment 18 gezeigt. Für das Stellsegment 18 ist die zur Konsole 3 lagefeste Drehachse 20 veranschaulicht. Der Schwenkhaken 14, der Antriebslenker 16, das Stellsegment 18 und die Konsole 3 sind jeweils lediglich als Striche dargestellt. In Volllinien entspricht diese Darstellung einer Situation gemäß Fig. 1, die Stelleinrichtung 5 steht außer Eingriff zur Schwenkführung 4. Ausgehend von dieser Positionierung der Achsen verlagern sich diese bei der Aktivierung der Stelleinrichtung 5 in die strichliert dargestellten Lagen, was verdeutlicht, dass die bei der Stelleinrichtung 5 gegebene Viergelenkanordnung in ihrer der Schließstellung des Heckdeckels entsprechenden Lage (Lage 13) in eine Übertotpunktstellung eingefahren ist, die eine selbsthaltende Verspannung über den Schwenkhaken 14 bewirkt, die nur durch einen Antrieb zu lösen ist, nämlich über den Antriebsmotor 23 bei zur Stellrichtung gemäß Pfeil 26 entgegengesetzter Antriebsrichtung. Die dieser Antriebsrichtung des Motores 23 entsprechende Drehrichtung des Stellsegmentes 18 ist mit 28 bezeichnet und führt dazu, dass der im Maul 24 des Schwenkhebels 14 liegende Riegelzapfen 25 über die untere Maulflanke 29 - als Druckflanke - beaufschlagt wird, sodass die Koppel 10 und das mit dieser verbundene Schlossteil 11, und damit auch der nicht dargestellte Heckdeckel aus ihrer der Schließstellung (Lage 13) entsprechenden Lage in die vorgelagerte Lage 12 angehoben werden, womit sich beispielsweise durch Zusammenbacken von Dichtungen oder dergleichen gegebene, einer Öffnung des Heckdeckels entgegenstehende Kräfte überwinden lassen.

Wird für den Schwenkhaken 14, durch entsprechende Ansteuerung des Antriebsmotors 23, eine Zwischenstellung vorgesehen, in der der Riegelzapfen 25 über die untere Flanke 29 des Maules 24 zwar angehoben ist, aber bei noch gegebener Überdeckung über die obere Flanke 27, so lässt sich diese Liftfunktion auch nützen, um beim manuellen Öffnen des Heckdeckels durch Öffnen der Schlossanordnung den Heckdeckel mit minimierten Kräften öffnen zu können. Damit können beispielsweise auch Gasfedern oder dergleichen die Öffnungsfunktion übernehmen, sobald die Schlossanordnung geöffnet ist. Umgekehrt kann die geschilderte Funktion auch als Schließhilfe genutzt werden, wobei der Heckdeckel in der vorgelagerten Lage 12 über die Schlossanordnung gegen die karosserieseitige Heckdeckelanbindung 2 festgelegt wird, sodass nachfolgend durch entsprechendes Verschwenken des Schwenkhakens 7 der Heckdeckel in seine Schließstellung (Lage 13) gezogen werden kann.

Durch den symmetrischen Aufbau, bei dem dem der einen Seite zugehörigen als Zahnsegment ausgebildeten Stellsegment 18 gegenüberliegend ein Segment 30 lagefest über eine Querverbindung 31 zugeordnet ist, ist bezüglich der Stelleinrichtung 15 auch eine symmetrische Krafteinleitung auf die Schwenkführung 14 gewährleistet, sodass Verwindungskräfte weitgehend vermieden sind und auch eine Querführung zu erreichen ist.

## Patentansprüche

1. Heckseitige Heckdeckelanbindung (2) für Cabriolet-Fahrzeuge, deren Dachabdeckung zwischen einer Schließ- und einer Offenstellung umstellbar ist, bei Verstellbarkeit des Heckdeckels, ausgehend von seiner Schließstellung zwischen einer nach vorne oben aufgeschwenkten Beladestellung für den Kofferraum und einer nach hinten oben aufgeschwenkten Ablagestellung für die Dachabdeckung, wobei der Heckdeckel in seinem vorderen Bereich über eine Stellvorrichtung gegenüber der Karosserie verlagerbar abgestützt ist und wobei die Heckdeckelanbindung (2) eine karosserieseitige Schwenkführung (4) für den Heckdeckel umfasst, die zwischen einer nach oben ausgefahrenen, der Dachablagestellung des Heckdeckels entsprechenden Lage und einer unteren, der Schließstellung des Heckdeckels entsprechenden Lage (13) über eine Stelleinrichtung (5) umstellbar ist und die mit dem Heckdeckel über eine Schlossanordnung mit einem dem Heckdeckel und einem der Schwenkführung (4) zugeordneten Schlossteil (11) verbunden ist, welche zum Verschwenken des Heckdeckels in seine Beladestellung zu öffnen ist,
**dadurch gekennzeichnet,**
**dass** die Schwenkführung (4) durch eine Lenkeranordnung gebildet ist, die zwischen einer Zwischenstellung, die als Erfassungslage (12) einer der Schließstellung des Heckdeckels entsprechenden Stellung (13) vorgelagert ist, und ihrer der Schließstellung des Heckdeckels entsprechenden Stellung (13) über die Stelleinrichtung (5) zu verstellen ist.

2. Heckseitige Heckdeckelanbindung nach Anspruch 1,
**dadurch gekennzeichnet,**
**dass** die Lenkeranordnung als Viergelenk ausgebildet ist.

3. Heckseitige Heckdeckelanbindung nach Anspruch 2,
**dadurch gekennzeichnet,**
**dass** der der Schwenkführung (4) zugeordnete Schlossteil (11) mit der Koppel (10) des Viergelenks verbunden ist, dessen basisseitige Schwenkachsen (6, 7) zur Karosserie (3) lagefest sind.

4. Heckseitige Heckdeckelanbindung nach einem der vorhergehenden Ansprüche,
**dadurch gekennzeichnet,**
**dass** die Stelleinrichtung (5) als auf die Schwenkführung (4) zugreifende Spanneinrichtung ausgebildet ist und auf die Koppel (10) eines Viergelenks zugreift. H

5. Heckseitige Heckdeckelanbindung nach Anspruch 4,
**dadurch gekennzeichnet,**
**dass** der Koppel (10) des Viergelenks ein von einem Schwenkhaken (14) der Stelleinrichtung (5) zu erfassender Riegelzapfen (25) zugeordnet ist.

6. Heckseitige Heckdeckelanbindung nach Anspruch 5,
**dadurch gekennzeichnet,**
**dass** der Schwenkhaken (14) eine zur Karosserie lagefeste Schwenkachse (15) aufweist.

7. Heckseitige Heckdeckelanbindung nach Anspruch 5 oder 6,
**dadurch gekennzeichnet,**
**dass** der Schwenkhaken (14) über einen Antriebslenker (16) verschwenkbar ist, der mit einem Stellsegment (18) verbunden ist.

8. Heckseitige Heckdeckelanbindung nach Anspruch 7,
**dadurch gekennzeichnet,**
**dass** das Stellsegment (18) als karosserieseitig gelagertes Zahnsegment ausgebildet ist, das Bestandteil einer Antriebsanordnung ist.

9. Heckseitige Heckdeckelanbindung nach Anspruch 8,
**dadurch gekennzeichnet,**
**dass** das Stellsegment motorisch, insbesondere über einen Getriebemotor (23) antreibbar ist.

10. Heckseitige Heckdeckelanbindung nach Anspruch 9,
**dadurch gekennzeichnet,**
**dass** die Motorachse quer zum Stellsegment (18) liegt.

11. Heckseitige Heckdeckelanbindung nach einem der vorhergehenden Ansprüche,
**dadurch gekennzeichnet,**
**dass** die Stelleinrichtung (5) eine Viergelenkanordnung umfasst, die in ihrer der Schließstellung des Heckdeckels entsprechenden Lage zumindest nahezu eine Totpunktstellung einnimmt.

12. Heckseitige Heckdeckelanbindung nach Anspruch 11,
**dadurch gekennzeichnet,**
**dass** die Stelleinrichtung (5) eine Viergelenkanordnung umfasst, die in ihrer der Schließstellung des Heckdeckels entsprechende Lage eine Übertotpunktstellung einnimmt.

13. Heckseitige Heckdeckelanbindung nach Anspruch 11 oder 12,
**dadurch gekennzeichnet,**
**dass** die Viergelenkanordnung den Schwenkhaken (14), den Antriebslenker (16) und das Stellelement (18) umfasst, bei karosseriefester Lage der Basis.

14. Heckseitige Heckdeckelanbindung nach einem der vorhergehenden Ansprüche,
**dadurch gekennzeichnet,**
**dass** der Schwenkhaken (15) ein Hakenmaul (24) aufweist, über dessen einander gegenüberliegende Flanken (27, 29) der Riegelzapfen (25) in entgegengesetzten Richtungen beaufschlagbar ist.

15. Heckseitige Heckdeckelanbindung nach einem der vorhergehenden Ansprüche,
**dadurch gekennzeichnet,**
**dass** die Schwenkführung (4) und die Stelleinrichtung (5) über eine Kosole (3) getragen sind und mit der Konsole (3) eine zur Schwenkebene im Wesentlichen symmetrisch aufgebaute Baueinheit bilden, mit beiderseitig der Symmetrieebene liegenden Lenkern (8 und 9) der Schwenkführung (4) und entsprechend angeordneten Schwenkhaken (14) sowie diesen zugeordneten Stell- und Antriebsgliedern der Stelleinrichtung (5).

## Claims

1. Rear-side boot lid mechanism (2) for cabriolet vehicles whose roof cover is transposable between a closed and an open setting, the boot lid, starting from its closed setting, being adjustable between a loading setting for the boot, in which it is swung up forwards and upwards, and a storage setting for the roof cover, in which it is swung up rearwards and upwards, the boot lid being supported in its front region such that it is displaceable in relation to the body by means of a control apparatus and the boot lid mechanism (2) comprising a body-side pivot guide (4) for the boot lid, which is transposable by means of a control device (5) between an upwardly extended position corresponding to the roof storage setting of the boot lid and a lower position (13) corresponding to the closed setting of the boot lid and which is connected to the boot lid by a lock arrangement having one lock part (11) assigned to the boot lid and another assigned to the pivot guide (4), which lock arrangement can be opened to allow the boot lid to be pivoted into its loading setting, **characterized in that** the pivot guide (4) is formed by a link arrangement, which can be adjusted by means of the control device (5) between an intermediate setting, which, as a grab position (12), is in advance of a setting (13) corresponding to the closed setting of the boot lid, and its setting (13) corresponding to the closed setting of the boot lid.

2. Rear-side boot lid mechanism according to Claim 1, **characterized in that** the link arrangement is configured as a four-bar mechanism.

3. Rear-side boot lid mechanism according to Claim 2, **characterized in that** the lock part (11) assigned to the pivot guide (4) is connected to the coupler (10) of the four-bar mechanism, the base-side pivot axes (6, 7) of which are positionally fixed relative to the body (3).

4. Rear-side boot lid mechanism according to one of the preceding claims, **characterized in that** the control device (5) is configured as a tensioning device accessing the pivot guide (4) and accesses the coupler (10) of a four-bar mechanism.

5. Rear-side boot lid mechanism according to Claim 4, **characterized in that** to the coupler (10) of the four-bar mechanism there is assigned a locking pin (25) to be grabbed by a pivot hook (14) of the control device (5).

6. Rear-side boot lid mechanism according to Claim 5, **characterized in that** the pivot hook (14) has a pivot axis (15) which is positionally fixed relative to the body.

7. Rear-side boot lid mechanism according to Claim 5 or 6, **characterized in that** the pivot hook (14) is pivotable by means of a drive link (16) connected to a control segment (18).

8. Rear-side boot lid mechanism according to Claim 7, **characterized in that** the control segment (18) is configured as a toothed segment which is mounted on the body side and forms a constituent part of a drive arrangement.

9. Rear-side boot lid mechanism according to Claim 8, **characterized in that** the control segment can be motor-driven, in particular by means of a gear motor (23).

10. Rear-side boot lid mechanism according to Claim 9, **characterized in that** the motor axis lies transversely to the control segment (18).

11. Rear-side boot lid mechanism according to one of the preceding claims, **characterized in that** the control device (5) comprises a four-bar arrangement, which, in its position corresponding to the closed setting of the boot lid, assumes at least virtually a dead-centre position.

12. Rear-side boot lid mechanism according to Claim 11, **characterized in that** the control device (5) comprises a four-bar arrangement, which, in its position corresponding to the closed setting of the boot lid, assumes an over-dead-centre position.

13. Rear-side boot lid mechanism according to Claim 11 or 12, **characterized in that** the four-bar arrangement comprises the pivot hook (14), the drive link (16) and the control element (18), the base being in a body-fixed position.

14. Rear-side boot lid mechanism according to one of the preceding claims, **characterized in that** the pivot hook (15) has a hook mouth (24), the mutually opposing flanks (27, 29) of which can act upon the locking pin (25) in opposite directions.

15. Rear-side boot lid mechanism according to one of the preceding claims, **characterized in that** the pivot guide (4) and the control device (5) are borne by a bracket (3) and form with the bracket (3) a structural unit constructed essentially symmetrically to the pivot plane and comprising links (8 and 9) of the pivot guide (4), situated on both sides of the plane of symmetry, and correspondingly disposed pivot hooks (14), as well as control and drive members of the control device (5), which are assigned to the said pivot hooks.

## Revendications

1. Attache arrière de hayon arrière (2) pour un véhicule cabriolet, dont la couverture de toit peut être déplacée entre une position d'ouverture et une position de fermeture, le hayon arrière étant ajustable à partir de sa position de fermeture, entre une position de chargement ouverte en avant vers le haut pour le coffre et une position de rangement ouverte en arrière vers le haut pour la couverture de toit, le hayon arrière étant appuyé de manière déplaçable dans sa région avant par rapport à la carrosserie au moyen d'un dispositif de réglage, et l'attache de hayon arrière (2) comprenant un guidage par pivotement (4), qui est situé du côté de la carrosserie, (4) pour le hayon arrière et qui peut être déplacé à l'aide d'un organe de réglage (5), entre une position déployée vers le haut, correspondant à la position de rangement du toit du hayon arrière, et une position inférieure (13) correspondant à la position de fermeture du hayon arrière, et qui est relié au hayon arrière par l'intermédiaire d'un système de serrure au moyen d'une pièce de serrure (11) attribuée au hayon arrière et au guidage par pivotement (4), qui doit être ouvert lors du pivotement du hayon arrière dans sa position de chargement,
**caractérisée en ce que**
le guidage par pivotement (4) est constitué d'un système de bras oscillant, qui peut être ajusté au moyen de l'organe de réglage (5), entre une position intermédiaire qui précède une position correspondant à la position de fermeture du hayon arrière, en tant que position de saisie (12), et sa position (13) correspondant à la position de fermeture du hayon arrière.

2. Attache arrière de hayon arrière selon la revendication 1,
**caractérisée en ce que**
le système de bras oscillant est conçu comme une charnière carrée.

3. Attache arrière de hayon arrière selon la revendication 2,
**caractérisée en ce que**
la pièce de serrure (11) attribuée au guidage par pivotement (4) est reliée à la bielle (10) de la charnière carrée, dont les axes de pivotement (6, 7) situés du côté de la base sont fixes par rapport à la carrosserie (3).

4. Attache arrière de hayon arrière selon l'une des revendications précédentes,
**caractérisée en ce que**
l'organe de réglage (5) est conçu comme un organe de serrage intervenant sur le guidage par pivotement (4), tout en intervenant sur la bielle (10) d'une charnière carrée.

5. Attache arrière de hayon arrière selon la revendication 4,
**caractérisée en ce qu'**
un téton de pêne (25) devant être saisi par un crochet de pivotement (14) de l'organe de réglage (5) est attribué à la bielle (10) de la charnière carrée.

6. Attache arrière de hayon arrière selon la revendication 5,
**caractérisée en ce que**
le crochet de pivotement (14) possède un axe de pivotement (15) fixe par rapport à la carrosserie.

7. Attache arrière de hayon arrière selon la revendication 5 ou 6,
**caractérisée en ce que**
le crochet de pivotement (14) peut être pivoté par l'intermédiaire d'un bras d'entraînement (16), qui est relié à un segment de réglage (18).

8. Attache arrière de hayon arrière selon la revendication 7,
**caractérisée en ce que**
le segment de réglage (18) est conçu comme un segment denté monté du côté de la carrosserie et faisant partie d'un système d'entraînement.

9. Attache arrière de hayon arrière selon la revendication 8,
**caractérisée en ce que**
le segment de réglage peut être entraîné par moteur, notamment par un moteur à engrenages (23).

10. Attache arrière de hayon arrière selon la revendication 9,
**caractérisée en ce que**
l'axe du moteur est orienté en travers du segment de réglage (18).

11. Attache arrière de hayon arrière selon l'une des revendications précédentes,
**caractérisée en ce que**
l'organe de réglage (5) comprend un système de charnière carrée, qui se trouve au moins quasiment au point mort lorsqu'il est dans une position correspondant à la position de fermeture du hayon arrière.

12. Attache arrière de hayon arrière selon la revendication 11,
**caractérisée en ce que**
l'organe de réglage (5) comprend un système de charnière carrée, qui se trouve dans une position de dépassement de point mort lorsqu'il est dans une position correspondant à la position de fermeture du hayon arrière.

13. Attache arrière de hayon arrière selon la revendication 11 ou 12,
**caractérisée en ce que**
le système de charnière carrée comprend le crochet de pivotement (14), le bras d'entraînement (16) et l'élément de réglage (18), la base étant fixe par rapport à la carrosserie.

14. Attache arrière de hayon arrière selon l'une des revendications précédentes,
**caractérisée en ce que**
le crochet de pivotement (15) comporte une mâchoire de crochet (24), dont les flancs (27, 29) opposés permettent d'actionner le téton de pêne (25) dans des directions opposées.

15. Attache arrière de hayon arrière selon l'une des revendications précédentes,
**caractérisée en ce que**
le guidage par pivotement (4) et l'organe de réglage (5) sont soutenus par une console (3) et forment, avec la console, une unité de construction structurée principalement de façon symétrique par rapport au plan de pivotement, avec des bras oscillants (8 et 9) du guidage par pivotement (4), situés de part et d'autre du plan de symétrie, et des crochets de pivotement (14) disposés de manière correspondante, ainsi que des éléments de réglage et d'entraînement de l'organe de réglage (5) associés à ceux-ci.
